# EUROPEAN PATENT APPLICATION

(11) **EP 2 028 483 A2**
(43) Date of publication of application: **25.02.2009**
(21) Application number: 08014854.7
(22) Date of filing: 21.08.2008
(51) Int. Cl.: G01N 27/00

(54) **Chemical sensor on daimond film**

(30) Priority: 22.08.2007 DE 102007039706
(71) Applicant: Kohn, Erhard, 89081 Ulm-Lehr (DE)
(72) Inventor: Kohn, Erhard, 89081 Ulm-Lehr (DE); Denisenko, Andrej, 89075 Ulm (DE); Dipalo, Michele, 89231 Neu-Ulm (DE)
(74) Representative: Reitzle, Helmut

(57) **Abstract**

A planar solid state chemical sensing device with poly- or nano-crystalline diamond surface is described in which a doped channel structure of diamond on an insulating diamond buffer layer is exposed to a target electrolyte solution. The device can be operated in the FET and in the electrode modes. The device can be implemented as an array of microstructures integrated with other diamond-based sensors and micro-systems and can be used for chemical sensing in harsh environments as well as in bio-sensing applications.

## Description

Most applications of diamond in the field of chemical sensing are related to electrode structures, in which the electrical current *across* the diamond-electrolyte interface is used for the detection purpose. These diamond-based electrodes are p-type boron-doped layers. Due to the high chemical stability they are used for electro-analytical purposed in aggressive media, see *"*Diamond Electrochemistry" A. Fujushima, Y. Einaga, T. Rao, D. Tryk (Eds.), Elsevier Publ., 2005, 586 pp.

Diamond is also a bio-compatible material, which can be used in bio-sensing applications. Diamond-based biosensing electrodes may include an additional layer on the diamond surface for efficient attachment of an organic substance in contact to a target chemical. In simple structures it could be a platinum layer for glucose sensing, like in C. Trope, et al, Diamond related Mater., 7 (1998) 575. Also, the bio-sensing electrode structures on diamond may incorporate an organic bio-membrane attached to the semiconducting diamond surface, see K. Kobashi, *"Diamond film biosensor",* US Patent 5777372, filed on 01.03.1996. The bio-sensing element on the surface of the diamond electrode induces a specific adsorption reaction in contact to the target chemical. The adsorption reac-tion is detected by measuring the electrical current *across* the electrode-electrolyte interface. The target reaction can also be detected by measuring the small-signal characteristics of the electrode-electrolyte interface in the kHz frequency range. For such a purpose, the electrode structure may represent a metal-insulator-semiconductor structure with a catalytic metal in contact to the target chemical, see J. von Windheim, et al., *"Diamond-based chemical sensor",* US Patent 5362975, filed on 08.07.1993. However, no amperometric sensing with this electrode structure is possible. The presence of a catalytic metal may change the characteristics of the diamond-metal interface, so that the DC current the diamond-metal diode can be used as the detection signal, see W.P. Kang, et al., *"Chemical sensor utilizing a chemically sensitive electrode in combination with thin diamond layer* ", US Patent 5656827, filed on 30.05.1995. But the potential window of such sensor is reduced to that of the metal. This means than only a limited number of redox reactions can be detected.

Another type of chemical sensor on diamond is a chemical sensitive field effect transistor device (ChemFET). The device operation is based on the well-known principle of that of the ion-sensitive transistor described in C. C. Johnson and J. Janata, "*Selective chemical sensitive FET transducers",* US Patent 4020830, filed on 12.05.1975. A version of a diamond-based ChemFET is described in A. Denisenko, A. Alekson and E. Kohn, *"pH sensor based on wide bandgap semiconductors"* German Patent Application DE10007525A1, filed on 18.02.2000, and also in H. Kawarada, "Field-effect transistor", US Patent 6833059, filed on 13.11.2001. The devices utilised a hydrogen-induced surface conductivity and C-H surface termination. The conductive layers can be fabricated both on single crystal and large-area poly-crystalline diamond substrates. The conductivity of the H-induced surface channel is highly sensitive to ionic adsorption. Therefore the H-terminated ChemFET on diamond may operate without external gate contact in the target electrolyte. However, the C-H surface bonds are chemically instable. At anodic polarisation in electrolytes the H-termination is converting into the oxygen-termination state. It can be restored back only by treatment in H-plasma. Therefore the H-terminated ChemFET on diamond degrade rapidly even in mild chemistry and are of very limited use in practical applications.

The ChemFET structures have been also realised with stable oxygen-terminated surface and delta-doped channels on single crystal diamond. A. Denisenko et al, Diamond and Related Materials" 16 (2007) 905. The fabricated doping profile in this structure was approx. 1 nm thick. The gate area of this sensor device was in direct contact to a target electrolyte solutions. However, the chemical activity of the single crystal surface for amperometric sensing is limited by a low rate of charge transfer and by large time-constants to reach equilibrium. Besides, the ionic adsorption on the surface functional groups on single crystal diamond can introduce memory effects and drift of the ISFET characteristics C. Pietzka et al, "Electronic states on diamond surface by electrochemical oxidation", Proc. of the Hasselt Diamond Workshop SBDD XII 28.02. - 02.03.2007 Hasselt, Belgium, abstract 8.4, p. 122. In addition, the high cost and the low area of single crystal substrates limit the practical use of the sensors.

### Summary of the invention

The objective of the present invention is to use the chemical activity of the grain boundary network in a chemical sensitive field effect transistor on large area poly- and nano-crystalline diamond substrates for integration in practical device structures with improved sensing and dynamic behaviour compared to the single crystal material.

This object is solved by the chemical sensing device according to claim 1 and by the method for producing a chemical sensing device according to claim 14. Preferred embodiments of the chemical sensing device are given by the dependent claims.

The critical issue of the new sensor device is a technology of a delta-doped channel for the poly- and nano-crystalline surfaces. The new device structure combines two detection principles: (i) amperometric mode of an electrochemical electrode and (ii) field-effect transistor mode. The chemically active sites at the grain boundaries play a key role in the performance of the invented ChemFET. The chemical activity of the grain boundary defects is substantially higher, compared to the single crystal surfaces. Also, the surface functional groups located in the grain boundary areas are less affected by adsorption effect. This provides a more stable operation with less "memory effect" and drift of the FET characteristics.

The high selectivity to adsorption makes the ChemFETs on poly- crystalline surface attractive for amperometric sensing, like the bulk-doped diamond electrodes. The amperometric sensitivity of the grain boundary defects can be improved further by attaching metal nano-clusters or carbon nano-particles in a similar way as it has been proposed in [11] E. Kohn et al. *"Chemical sensor",* German Patent Application 10 2006 007910.8, filed 19.02.2006.

### Detailed description

The invention relates to a planar chemically sensitive field-effect transistor with poly- or nano-crystalline diamond surface and with p-type boron-doped channel and pH sensitive surface termination. The device is primarily designed for chemical tests in harsh environments, where other semiconductor materials would degrade due to corrosion. The surface of the device can be in direct contact with the tested electrolyte solution. The carrier density in the boron-doped channel can be modulated by applying a potential to the external gate electrode immersed into the electrolyte solution. The gate potential can be calibrated versus the potential of a pH-independent reference electrode in the solution using external circuitry. At a constant gate-to-source potential, the charge in the FET channel (drain current) can be modulated additionally by varying pH of the electrolyte. The pH sensitivity of the surface potential is determined by the chemically active surface functional groups on the diamond surface. The value of the drain current is recorded by an external circuit and can be translated into the pH of the electrolyte using calibration data. The pH sensing characteristics can be controlled by exposure of the diamond surface area to a certain treatment procedure. High-quality diamond poly- and nano-crystalline is characterised by a wide potential window between the onset of hydrogen and oxygen evolution reaction. This feature enables a wide range of the gate potentials to control the FET channel without gate leakage current.

Another feature of the sensor is that grain boundaries are in contact with the electrolyte. Usually, grain boundary defects are characterised by a selective chemical reactivity, which is significantly different from the diamond grains. Depending on the surface treatment and the electrolyte chemistry, the selective adsorption reactions at the grain boundary defects can be observed within the potential range of the water electrolysis at the diamond surface. Therefore, the pH sensitive FET on poly-/nano-crystalline diamond can also be used in amperometric mode to identify the redox reactions and to measure the concentration of the desired chemical species. The switching between the potentimetric (FET) and the amperometric (electrode) modes can be performed with external circuitry. The combination of the two modes can be very useful in bio-chemical applications, where both the pH and the species concentration, like dissolved oxygen, need to be detected simultaneously. Such sensor device can be used in chemically aggressive media, like blood.

As described above, the device can be operated in the mode of a field-effect transistor (potentiometric mode) as well as in the mode of an electrochemical electrode (amperometric mode). The chemical sensing device according to the invention can enable the surface stabilization and/or cleaning by amperometric pre-treatments. The substrate of the device can preferably be silicone, glass or ceramic. The substrate can also be a metal in conjunction with at least one insulating buffer layer. The chemical sensing device according to the invention can enable the integration in sensor arrays or matrices. It can also enable to integration with other diamond sensing elements like thermistors. Preferably the sensing device can enable the integration into a capillary system of diamond. The doping concentration of boron in the boron-doped channel layer is preferably close to or above the full activation limit of the boron acceptors in diamond, preferably about 10²⁰ 1/cm³.

### Fabrication

The diamond layers including the doped channel can be grown by chemical vapour deposition method. The deposition process can be activated by hot-filament or by microwave-assisted plasma. The diamond layers can for example be grown on silicon, ceramic or glass surfaces choosing the conditions for the hetero-epitaxial growth. Also, by varying the growth parameters the morphology of the diamonds surface can be controlled. The surface of the grown diamond layers can be randomly oriented micro-crystalline, highly-oriented (HOD), or nano-crystalline diamond (NCD) with the grain size down to 10 nm. Each type of the surface morphology is characterised by a distinctive pattern of the electrochemical characteristics, i.e., the window of water electrolysis and adsorption reactions.

The conductive channel of the FET can be fabricated by growing a layer of p-type boron-doped diamond with controlled thickness and doping profile. The doping is achieved by adding boron-carrying gases, like diborane, or a solid doping source into the growth reactor. The growth of the insulating buffer /doped channel / undoped buffer (optional) can be performed in one a growth reactor by varying the growing conditions and the gas environment, or in separate reactors.

The surface termination for chemical sensing can be with oxygen, nitrogen, fluorine, or some with more complicated chemical radicals. The surface can be terminated using a plasma process, wet chemical or electrochemical process, photo-chemical reactions, thermal treatment, or by combination of any of these methods. Nano-particles can be attached to the diamond surface either during the fabrication or in electrolytes using electrophoresis technique. The selective adsorption of the nano-particles to the grain boundary defects is determined by their selective electrochemical characteristics, which are different from those of the diamond grains.

The device area like mesa, ohmic contacts and epoxy passivation can be patterned using the standard proces.

The "all-carbon" sensor can be fabricated on silicon, or on any other non-active substrate material which can be selectively etched by chemically processing or by plasma sputtering/etching. The selective growth of diamond and the backside metallization on selectively-etched silicon substrate can be done according to the recipe described in [14] E. Kohn et al, *"Diamond component with rear side contact and a method for the production thereof"* International Patent Application PCT/EP/99/03879 registered in Germany, filed on 04.06.98.

In the following the invention is described by means of examples with reference to the figures.

### Brief Description of the Drawings

- Fig. 1: shows a cross section of three versions of a chemical sensor according to the present invention. Fig. 1a illustrates a cross-sectional view of the first embodiment of the sensor device fabricated on nano-crystalline diamond
- Fig. 2: shows a cross-section of an "all-carbon" chemical sensor according to the present invention.
- Fig. 3: shows the DC output characteristics of the first embodiment of the sensor device according to the present invention. The measurements were performed in 0.1M KOH electrolyte.
- Fig. 4: shows the transfer characteristics of the first embodiment of the sensor device in 0.1M H₂SO₄ and 0.1 M KOH solutions. V_{DS} = -0.5 Volts, VGS = -0.5 V vs. SCE (saturated calomel electrode). The arrows show the sequence of the pH tests.

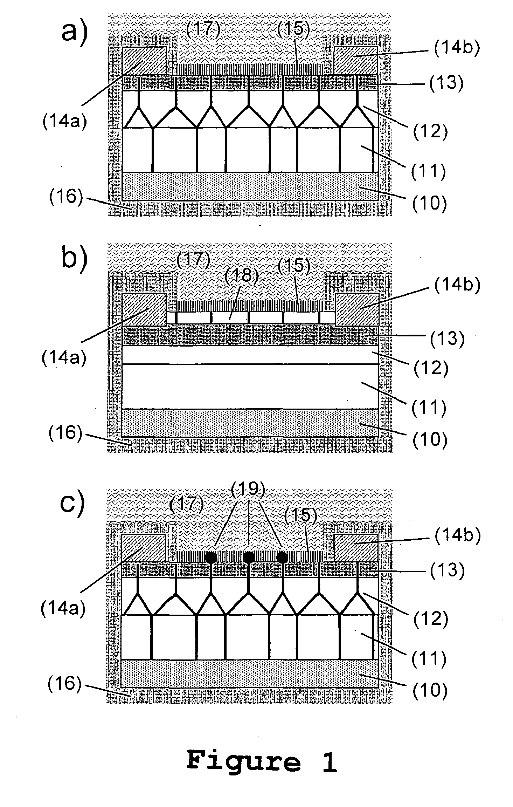

The described device in Fig. 1a comprises an insulating substrate **10** like undoped silicon, ceramic or glass, highly insulating diamond buffer **11** thereon, a thin layer of high-quality undoped diamond **12** and a few nm-thick boron-doped channel **13** on top. The boron concentration in the channel is close or above the full activation limit of boron in diamond, which is about 1×10²⁰ 1/cm³. The total density of the boron acceptors in the channel should not exceed a value of about 4×10¹³ 1/cm². The limited density of the acceptors enables depletion of the channel change within the potential range of water electrolysis at the diamond surface. This leads to the concept of delta-doping. The delta-doped channels are used in electronic devices on single crystal diamond [12], M. Kunze, A. Vescan, G. Dollinger, A. Bermaeir, E. Kohn, Carbon 37 (1999) 787; and [13] E. Kohn et al, J. Phys. D: Appl. Phys. 34 (2001) R77.

In the first version of the structure, the delta-doped channel is incorporated in nano-crystalline diamond, where the grain boundary network provides the high electrochemical activity. The surface of diamond is covered with chemically active functional groups **15,** like C-OH to provide pH sensitivity of the surface potential. The device includes also the source **14a** and the drain **14b** ohmic contacts fabricated by metal deposition or by selective growth of highly boron-doped layers directly onto the FET channel. The contact areas are protected by a chemically resistant passivation layer **16,** which also defines the gate area in contact with the electrolytes 17. The passivation layer can be either epoxy or highly insulating diamond grown selectively on top of the fabricated FET structure. The device assembly includes also the gate and the reference electrodes in the electrolyte, which are commonly used in ion-sensing devices. The gate electrode can be implemented as a separate part. Alternatively it can be a planar structure on the diamond surface integrated with the FET device.

A second version of the sensor device according to the present invention is shown in Fig.lb. It incorporates a few nm thin barrier layer of undoped diamond **18** grown selectively between the ohmic contact areas **14a** and **14b** on top of the FET channel **13.** The undoped surface layer helps to avoid the contact between the electrolytes and the boron-carbide clusters which eventually might be formed in the highly doped channel. The presence of the undoped diamond layer may also improve the electrical resistance across the depletion layer of the channel, which for the case of high doping is limited by tunnelling to the surface states in the bandgap. Thus, the transfer characteristics of the FET can be improved. In this example, the insulating diamond buffer **11** and high quality layer **12,** as well as the doped channel **13** are made of single crystal diamond. The barrier layer **18** consists of nano-crystalline diamond.

A third version of the sensor device according to the present invention is shown in Fig. 1c. It incorporates nano-clusters of metal or carbon nano-particles /nano-tubes **19** attached to the grain boundaries within the gate area of the device. The nano-particles can be attached to the diamond surface using a galvanic deposition method. Due to the high chemical activity of the grain boundary defects, the metal clusters will be attached primarily at the grain boundaries. Ionic adsorption to the attached nano-particles may improve the amperometric sensing characteristics of the diamond surface. By choosing the type of the nano-particles, one can control the selectivity of the sensing characteristics. Besides, the attached nano-clusters can be used to attach organic species for bio-sensing application of the sensor device.

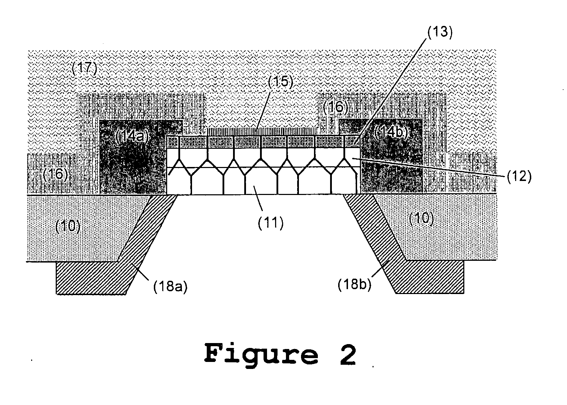

A 4^{th} version of the sensor device according to the present invention is shown in Fig. 2. It comprises a diamond buffer **11,** insulating diamond layer **12** and boron delta-doped channel **13** thereon, grown selectively on an insulating silicon substrate **10.** The ohmic contacts **14a** and **14b** to the FET channel are selectively grown boron-doped layers with low electrical resistance. The chemical passivation layer **16** forming the gate area in contact to the electrolyte **17** is a selectively grown insulating diamond layer. The silicon substrate 10 is etched selectively from the back, resulting in a diamond membrane. The edges of the etched profile in the silicon substrate are controlled so that a part of the diamond ohmic contacts **14a** and **14b** are opened. The additional metal layers **18a** and **18b** are deposited at the edges of the etched profiles so that not-rectifying contacts are formed between the metallization and the diamond ohmic contacts. The described sensor represents an "all-carbon" device, where only diamond is in contact with the electrolyte solution.

### Embodiment and chemical tests

A sensor device according to the description has been fabricated on a silicon substrate **10** using a hot-filament chemical vapour deposition reactor. The growth procedure included a bias-enhanced nucleation process. The diamond substrate **11** was an intrinsic layer. The boron-doped channel **13** on top of the insulating buffer **12** was grown using a three-methyl-borate doping source. The boron concentration in the channel **13** was about 3×10²⁰ 1/cm³. The channel thickness was about 2 - 3 nm. The surface of the grown diamond layer was nano-crystalline with the average size of the grains of about 100 nm. The surface of the grown diamond was exposed to oxygen plasma followed by a wet chemical oxidation treatment to induce the chemically active surface functional groups **15.** The individual mesa structures were formed by dry plasma etching using photolithographic masks. The source and the drain ohmic contacts **14a** and **14b** were made by Ti/Au meatllisation and formed with a lift-off technique. The contact areas of the transistor were passivated using an adhesive epoxy foil.

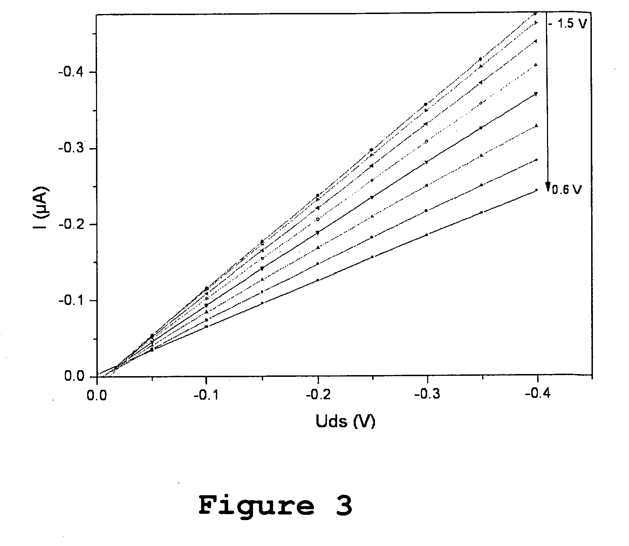

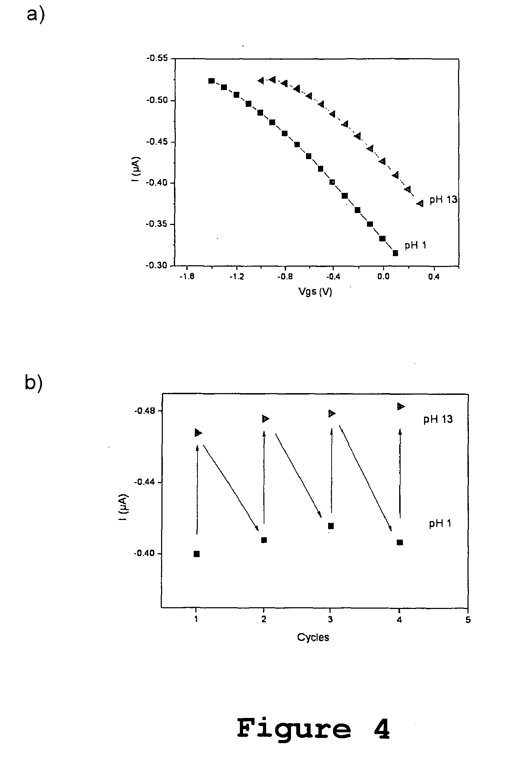

The fabricated FET structures were tested in 0.1M H₂SO₄ and 0.1M KOH solutions at room temperature (Fig. 3 and Fig. 4). The gate bias was applied to a platinum electrode immersed into the electrolytes **17.** The gate potential was controlled by a potentiostat with respect to the potential of a reference electrode. The stability and low drift of the ChemFET characteristics demonstrate the potential of the invented sensor for harsh media applications.

The fabricated structure was also characterised by an adsorption reaction observed at the negative gate potentials of the FET (positive electrode potentials, Fig. 5). The adsorption reaction was recorded in the electrode mode, where both ohmic contacts **14a** and **14b** were short-circuited. The observed adsorption process was related to the grain boundary activity. The adsorption rate was at least one order of magnitude higher than for the analogous FETs on single crystal diamond substrates. The adsorption process did not disturb the transfer characteristics of the device in the FET mode (Fig. 3a). Thus, both the FET (potentiometric mode) and the electrode (amperometric mode) were demonstrated in the identical device structure.

## Claims

1. Chemical sensing device comprising a layer of single-crystalline, or poly- and/or nano-crystalline diamond with a highly boron-doped conducting channel layer of single-crystal or poly- and/or nano-crystalline diamond of a few nano-meter in thickness on the top and which is arranged such that at least a part of the surface of the channel layer is contactable with an electrolyte from the exterior, and which is also **characterized in that** the surface or a part of the surface of the channel layer contactable with electrolytes comprises a chemically stable termination combined with chemically active sites generated by a grain boundary network of the diamond of the highly conducting layer, and/or chemically active nano-clusters for selective sensing.

2. Chemical sensing device according to the previous claim, **characterized by** at least two ohmic contacts to the boron-doped channel layer for wiring to external contact pads, which are protected by chemically resistant passivation in such a way that the edges of this passivation on the surface of the channel layer between the two ohmic contacts form an area contactable with an electrolyte from the exterior, which allows to operate this sensor device in the mode of ion-sensitive field-effect transistor, operating also as an electrochemical electrode.

3. Chemical sensing device according to one of the preceding claims **characterized in that t**he doping concentration of boron in the channel layer is ≥ 5*10¹⁹ 1/cm³, preferably ≥ 10²⁰ 1/cm³, preferably ≥ 2*10²⁰ 1/cm³ and/or ≤ 10²¹ 1/cm³, preferably ≤ 8*10²⁰ 1/cm³, preferably ≤ 5*10²⁰ 1/cm³.

4. Chemical sensing device according to one of the preceding claims, **characterized in that** the part of the surface of the channel layer which is contactable with the electrolyte is terminated by oxygen, preferably using thermal, plasma wet chemical, anodic oxidations or a combination of those methods,
or that the part of the surface is terminated by fluorine, preferably using a fluorine-containing plasma, or
that the part of the surface is terminated by nitrogen, preferably using a nitrogen-containing plasma.

5. Chemical sensing device according to one of the preceding claims, **characterized in that** the grain boundaries within the part of the surface of the channel layer which is contactable with the electrolyte are decorated by carbon-based nanoparticles.

6. Chemical sensing device according to one of the preceding claims **characterized in that** organic substances like biological cells are attached to the diamond surface within the part of the surface of the channel layer which is contactable with the electrolyte.

7. Chemical sensing device according to one of the preceding claims **characterized in that** the chemical sensing device is a small area device with random or textured topography, wherein the grain size of the diamond grain is greater or equal 10 nm, preferably greater or equal 40 nm and/or smaller or equal 100 nm, preferably smaller or equal 80 nm, preferably smaller or equal 60 nm or
that the sensing device is a large area device with random or textured topography, wherein the grain size is greater or equal 100 nm, preferably greater or equal 500 nm, preferably greater or equal 1 µm, preferably greater or equal 5 µm, preferably greater or equal 20 µm, preferably greater or equal 40 µm and/or smaller or equal 100 µm, preferably smaller or equal 80 µm, preferably smaller or equal 60 µm.

8. Chemical sensing device according to one of the preceding claims, **characterized in that** a sheet charge density in the channel layer is greater or equal 10¹² 1/cm³, preferably greater or equal 5*10¹² 1/cm³, preferably greater or equal 10¹³ 1/cm³ and/or smaller or equal 3*10¹³ 1/cm³, preferably smaller or equal 2*10¹³ 1/cm³, wherein preferably a part of the sheet charge density is compensated by nitrogen or phosphorous.

9. Chemical sensing device according to one of the preceding claims, **characterized in that** the doped channel layer incorporates a barrier layer comprising or consisting of undoped diamond separating the doping spike from a layer which is in contact with the electrolyte solution, wherein preferably the barrier layer has a thickness of more than 1 nm, preferably more than 2 nm, preferably more than 3 nm, and/or less than 10 nm, preferably less than 7 nm, preferably less than 5 nm, and wherein preferably the barrier layer comprises or consists of poly- or nanocrystalline diamond and wherein more preferably the doped channel is arranged on a single crystal diamond layer.

10. Chemical sensing device according to one of the preceding claims, **characterized in that** the highly boron-doped conducting channel layer is arranged on a large-area poly-crystalline diamond substrate, which is preferably a polished CVD-grown wafer, and/or that the barrier layer and the doped channel are arranged on poly- or nanocrystalline diamond layers, and/or that the active diamond layer is grown on a foreign substrate, which is preferably an iridium-covered foreign substrate.

11. Chemical sensing device according to one of the preceding claims, **characterized in that** the active diamond layer is a free-standing membrane obtained by selective etching of the substrate.

12. Chemical sensing device according to one of claims 2 to 11, **characterized in that** the ohmic contacts contacting the channel as well as a wiring to external metal contact pads are localized boron-doped layers, which are preferably realized by selective epitaxy or by selective etching.

13. Chemical sensing device according to one of the claims 2 to 12, **characterized in that** the chemically resistant passivation layer on the surface comprises or consists of insulating diamond.

14. Method for producing a chemical sensing device according to one of the preceding claims, wherein at least one diamond layer and/or the doped channel is grown by a chemical vapor deposition method.
